# EUROPEAN PATENT APPLICATION

(11) **EP 0 531 138 A2**
(43) Date of publication of application: **10.03.1993**
(21) Application number: 92308012.1
(22) Date of filing: 03.09.1992
(51) Int. Cl.: A01G 25/09

(54) **Irrigation equipment**

(30) Priority: 04.09.1991 ZA 916998
(71) Applicant: VETSAK (CO-OPERATIVE) LIMITED, Isando 1600 (ZA)
(72) Inventor: Groenewald, Andries Petrus, Delmas 2210 (ZA)
(74) Representative: Enskat, Michael Antony Frank

(57) **Abstract**

Irrigation equipment which comprises an electrically driven winching apparatus (47),(48) adapted to be anchored at the side of a field (90) and to winch in a crawler irrigating unit (100) across the field (90) to which a lay flat hose (98) or any other flexible hose is connected to supply the water optionally with fertiliser and/or pesticide. Since the winching apparatus (47),(48) is electrically driven, it can be automatically controlled by timing devices (84) and by toggles located on the cable (102) which actuate limit switches (63). The combination of these allows great variability to the automatic controlling of irrigation schedules.

## Description

This invention relates to irrigation equipment, that is, equipment for use in irrigation, in agriculture, in arboriculture, viticulture, horticulture and similar activities. The invention is in principle applicable for large scale agricultural activities on large farms as well as for small scale activities such as on smallholdings and in horticultural applications.

Mechanical equipment for irrigation has been in use comprising a post which acts as a centre pivot for a bridge-type structure on wheels carrying sprinkling nozzles of various possible kinds, which structure rotates slowly around the centre pivot thereby irrigating a circular area which can be quite large, for example, several hectares in size. Other conventional irrigation equipment comprises quickly connectable and disconnectable irrigating pipes which can be laid on lands with irrigating nozzles installed and connected to a mains or manifold pipe in a number of successive positions, requiring labour to periodically move the pipe onwards after a desired or required period of supplying water to each area. These systems are costly and also require appreciable labour to be constantly in attendance while irrigating. They moreover require labour which must be relied upon to move the pipes at accurate time intervals otherwise some areas get watered more than others. They are especially unsuitable where it is desired for irrigation to be carried on at night while the evaporative loss is appreciably reduced. Irrigating equipment which is based on a permanent pipe work installation has also been used, especially where so-called cannon nozzles are used requiring again that the cannon nozzle be moved from one stand pipe to the next at precise time intervals in order to obtain even irrigation. The cannon nozzles give a larger area of coverage at each installation than other nozzle types but have the disadvantage that the droplets are large and thus create a heavy impact tending to damage seedlings and other small plants and to compact the soil as well as being adversely influenced by winds which reduce the cast of the cannon jet in the upwind direction and increase it in the downward direction giving some unreliability of coverage. These installations are also relatively expensive.

Crawling irrigators have been known which comprise the use of a water turbine on the irrigator to drive a winch which winches in a cable anchored at the edge of the field thereby gradually pulling the irrigator, for example, a cannon nozzle or other nozzle installation across the field. However, the speed of movement of this type of irrigator has been found to be unreliable and, as a consequence, the quantity of water delivered is not satisfactorily controllable resulting in over watering and under watering. This is partly due to unevenness in the land and in the water pressure driving a Pelton wheel or reaction turbine type hydraulic motor but also due to the effective diameter of the windlass onto which the cable is being wound up increasing as the device moves across a field. These devices, incorporating as they do the hydraulic motor, are inconveniently heavy, typically weighing from 200 to 300 kgs which makes them very unwieldy especially in wet conditions after irrigating. Sometimes, they even get stuck so that a tractor or vehicle is necessary to move them.

It is also found in current practice that in order to optimise the performance per hectare of such equipment it could be designed to maximise the track width which is irrigated on each passage of the hydraulic equipment. This results in the month to month electricity accounts, which are often overlooked, reaching excessive proportions. Although the original capital costs in such cases might have been considered to be acceptable the operating costs of such systems after a few years can become such as to no longer be economically justifiable. Apart from the economic realities connected with these systems there are in many cases objections to the effectiveness of them leading to poor hydrological practices which can make the system unacceptable, for example, in respect of ground compaction as the result of large droplet size and also the creation of run-off water where the absorption rate of the ground is exceeded.

These difficulties have tended to cause farmers to avoid travelling irrigators in relation to higher value cash crops such as, for example, vegetables, tobacco and potatoes . The application of such equipment has in many cases been limited to planted or artificial pastures.

It was an object of the invention to overcome these disadvantages existing in present practice. Further objects and advantages of the invention will become apparent in the course of the following description.

Irrigation equipment in accordance with this invention comprises an electrically driven winching apparatus adapted to be anchored at a desired or required location and a cable for connection to a crawler irrigating unit.

The cardinal feature is thus the removal of the winching apparatus from the crawler irrigating unit which makes the latter considerably lighter so that it can be pulled over the lands more easily and with less damage to the lands and crops. It can then also be easily handled by even a single labourer. The winching apparatus is preferably to be anchored at the edge of the field to be irrigated so that the crawler unit is drawn by the cable from the far edge of the field to the near edge of the field at which the winching apparatus is anchored.

Preferably, a timer device is included adapted to time and regulate periods during which the winch is winching and/or periods during which the winch is stationary and/or other described or required actions.

This allows irrigation to be carried out unattended by any labourers which, of course, is particularly convenient for irrigating throughout the course of the night. It also allows the timing of irrigation to be quite reliable.

In a preferred embodiment the cable has fitted to it one or more toggles and the winching apparatus has a yoke adapted to be engaged by a toggle while the cable is being winched in to activate a desired or required response. The desired or required response can, for example, be to switch the winching action off and with this approach the winch can be related not necessarily to a timed period which the timer could time but to an exact distance set by the toggle. For example, in one preferred arrangement the yoke is adapted to switch the winching action off when actuated by a toggle and the timer is adapted to restart the winching action after a desired or required time interval. With these means the apparatus can be set up for the irrigation to be effected at precisely defined positions for precisely defined time periods, whereafter the apparatus is winched forward to a new position and so on. The inter-relationship of timing and the use of toggles can thus be worked out to deal with all sorts of different irrigating requirements over the area of a field. For example, where cash crops are grown in the nature of vegetables, a patch of potatoes can be irrigated in a different way from a patch of cauliflowers and so on in a particularly precise and reliable way.

In accordance with another preferred embodiment of the invention, the apparatus is provided with an auxiliary windlass adapted for winching in a layflat drag hose or other hose after use. The handling of the drag hose has in the past presented a difficult and inconvenient problem due to its weight while lying stretched over the lands and still full of water. The auxiliary windlass while winding it on also expels the water and once it has been wound up on this windlass the winching apparatus can be moved on to the next position from which it is desired to winch the crawler irrigating unit. The drag flat hose will then be unrolled from the windlass to be connected to the irrigating unit at the far end of the field so that a further pattern of irrigation can be carried out.

The width of the band which can be irrigated while the crawler unit is drawn along by the cable will, of course, depend on the nature of the irrigating unit. The present invention is entirely flexible both as to the nature of irrigating components which can be used and the width of the swath or belt which is irrigated. Thus, a cannon type water jet can be employed, or alternatively impact type sprinklers or drop nozzles mounted along the length of a transverse boom, can be used. The invention also lends itself to other approaches. This versatility is of considerable advantage since the apparatus can be adapted to many different irrigating requirements.

In order to assist in moving the winching apparatus from one position to the next, it may be provided with a transmission which may be coupled to the electrical drive to drive the apparatus over the ground. Thus, if it is found that the winching apparatus is too heavy to be moved by a single labourer, this problem can be overcome. However, it has been found to be possible in several prototype models to make them light enough to be moved along only by a single labourer under those conditions.

The winching apparatus can, of course, also be adapted to allow adjusting the speed at which it winches the cable in, for example, in the transmission provided between the electric motor and the windlass for a cable.

The application of the equipment in accordance with the invention can be extended in an important respect if, as in another preferred embodiment, the winching apparatus comprises two windlasses and two cables for connection to two crawler irrigating units, one to each side of the winching apparatus. Thus, the apparatus can simultaneously winch in two irrigating units on opposite sides of the apparatus thus enabling the simultaneous irrigating of two fields, one on either side of the winching apparatus.

The handling of the drag hose can be considerably improved if the irrigation equipment further comprises a manifold pipe to be laid transversely to the direction in which the unit is drawn by the cable, with a drag hose to be connected from the pipe to the unit.

This manifold pipe can be laid transversely at the mid point between the winching apparatus and the far end of the field to be irrigated so that the drag hose needs only to be half the length of the total length over which the crawler irrigating unit is dragged in one irrigating operation providing one swath of irrigation.

The irrigation equipment can, of course, also be combined with fertiliser herbicide and/or insecticide dosing devices so that it can be used also for the application of fertiliser, herbicide and insecticide chemicals. In order to permit the dosing of such chemicals, a standard pump may be mounted on the winching apparatus, which may be powered by the same electric motor as the one which powers the windlass.

The irrigation equipment may further comprise a means of controlling the supply of water and/or fertiliser and/or herbicide and/or insecticide to the units which means may be linked to the winching apparatus so that the water and/or fertiliser and/or herbicide and/or insecticide can be switched on and off by signals from the winching apparatus. The concept here would as a first step comprise automatic switching off of the water and/or fertiliser and/or herbicide and/or insecticide supply, for example, at the stage where the irrigation is complete, perhaps when the crawler irrigating unit has been drawn right up to the winching apparatus or perhaps at an earlier stage when it is desired or required. Also, in principle, the switching on of the water supply and/or fertiliser and/or herbicide and/or insecticide can be controlled to occur at a desired or required timer setting and/or at a desired or required position of the winching-in cable as, for example, established by a toggle for this purpose.

A method of irrigating in accordance with the invention in its broadest concept, using the equipment of the invention, comprises placing a winching apparatus at the side of a field, placing a crawler irrigating unit in the field, connecting a hose from the unit to a source of irrigating water and a cable from the unit to the winch, supplying the water and electrically connecting and driving the winching apparatus. Preferred aspects of the method are disclosed elsewhere in this specification.

The invention will now be more fully described with reference to examples as shown in the accompanying drawings in which :
Figure 1 is a front elevation of irrigation equipment in accordance with a very basic embodiment of the invention,
Figure 2 is a front elevation of a more advanced embodiment of the invention,
Figure 3 is a rear elevation of the equipment shown in Figure 2,
Figure 4 is an end elevation of the equipment shown in Figure 2,
Figure 5 is an electrical circuit diagram for assistance in describing electrical circuitry,
Figure 6 is a front elevation of an irrigating unit in accordance with an embodiment of the invention, and
Figure 7 is a plan view of a field for description of the irrigation method in accordance with the invention.

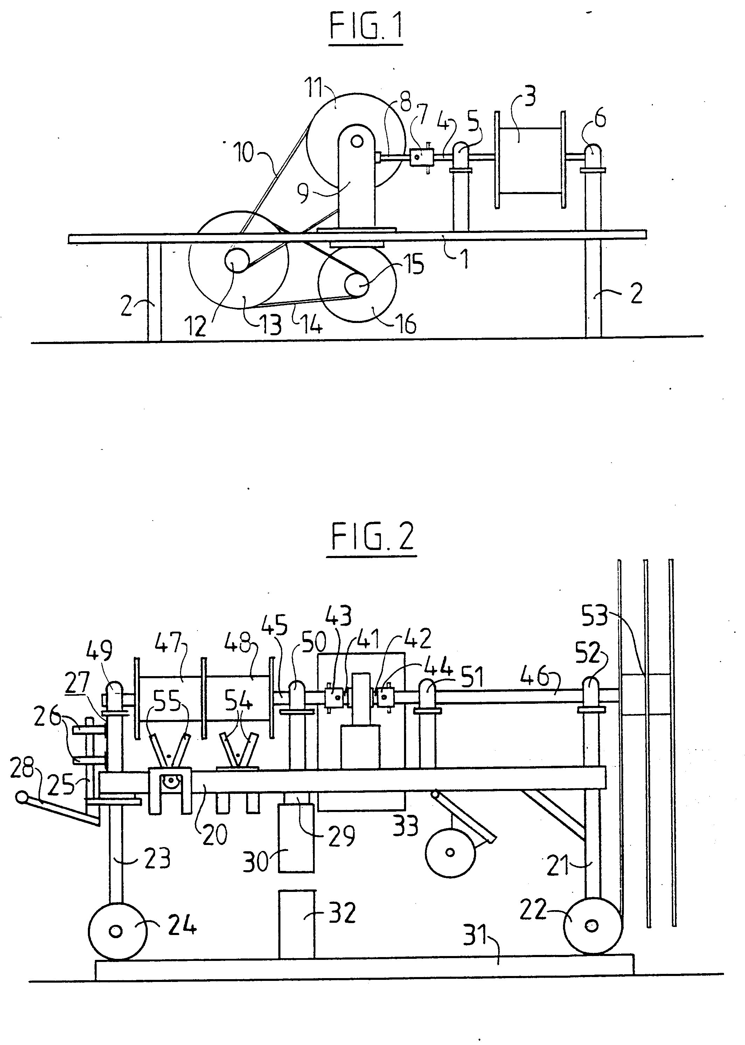

As shown in Figure 1 of the drawings, a basic irrigation unit in accordance with the invention comprise a chassis (1) on legs (2) which can be embedded in the ground or a foundation or removably bolted or otherwise latched or attached to the foundation. The chassis (1) carries a windlass (3) fixed on a shaft (4) which is journalled in plummer blocks (5) and (6) on the chassis. The shaft (4) has a bush (7) fixed to it and which rotatably has the output shaft (8) of a worm and pinion gearbox (9) running in it. The bush (7) and the end of the shaft (8) have holes bored through them to allow a pin to be passed through the bush (7) and the shaft (8) when it is desired that the drive from the output shaft of the gearbox (9) be transmitted to the shaft (4) and hence to the windlass (3). Otherwise the pin can be pulled out to disconnect the drive. The gearbox (9) is driven by a V-belt (10) on to an input pulley (11) of the gearbox (9), the V-belt (10) in turn being driven by a pulley (12) which is fixed to and thus driven by a larger pulley (13) which in turn is driven by a V-belt (14) driven by a smaller pulley (15) on the output shaft of an electric motor (16).

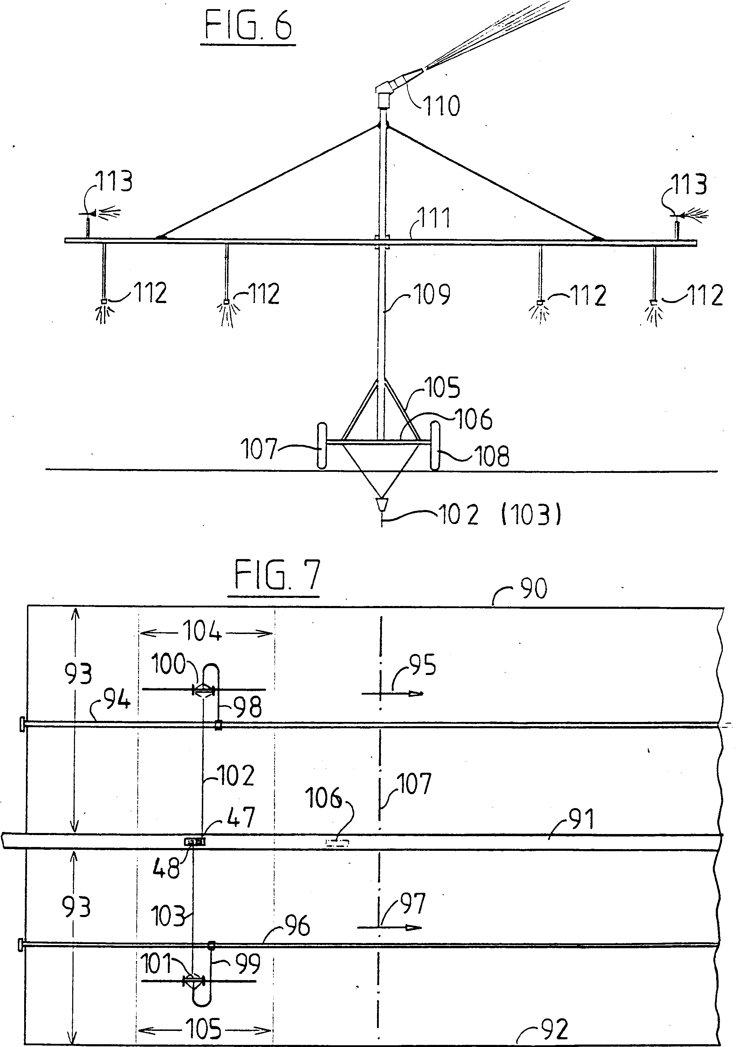

A cable is connected from the windlass (3) to a crawler irrigating unit of any desired or required kind, for example, as shown in Figure 6. An electrical supply is brought to the electric motor (16) and a hose is connected to the crawler unit and to the supply of water for irrigating. When the water supply is turned on the irrigating unit starts irrigating and the electric motor can then be switched on so as gradually to winch the unit in towards the winching apparatus. This is the most basic and simple concept of the invention and would require, of course, attendance by an individual, at least if he knew that it took say, for example, four hows for the unit to be winched in, he would have to be sure that he comes back shortly before the end of the four hours so as to attend to turning off of the water supply and the electrical supply to the electric motor. If he forgot, a toggle on the cable would trip the supply to the electric motor when the crawler unit had been winched close to the winching apparatus, alternatively, the pin in the bush (7) and shaft (8) could shear or an overload switch in the load current circuit could trip. Those events would, of course, merely be emergency events. Once a swath of land has been irrigated the winching apparatus shown in Figure 1 could then be moved to a further position at the edge of the next field or swath, the crawler unit moved correspondingly and the cable and hose connected again and a further swath irrigated in a similar way. A great advantage even of this simple system could be the lightness of the winching apparatus which could be carried by a single person or pushed on a wheelbarrow by a single person and the lightness of the crawler unit which can also be moved around easily on wheels by a single person. This minimises the labour requirements of the method.

The equipment is also versatile in that it can be adapted to very large fields, drawing large crawler irrigating units as well as to very small fields such, for example, as in smallholdings. Similarly, the crawler irrigating unit is extremely versatile and can comprise any known kind of irrigating means, such as a cannon irrigator, drop nozzles on booms, impact sprinklers, boom sprinklers, specialised nozzles for application of pesticides, the variation of the height of the boom from very close to the land surface to minimise wind interference to considerably higher where it is required to irrigate high crops and, for example, even trees in orchards. The toggles on the cables can, for example, simply be bolts which have a hole drilled through them transversely to allow the cable to pass through the hole and when a nut is screwed on to the bolt, to clamp the bolt on to the cable in a desired position.

The invention can, however, be implemented with more advantage in an embodiment as shown in Figures 2 to 5. As shown in Figures 2 to 4, the winching apparatus comprises a chassis (20) which has rear legs (21) carrying two rear wheels (22) and a front steering dolly (23) carrying two front wheels (24) and mounted on a vertical shaft (25) which is pivoted in plummer blocks (26) mounted on a vertical front surface (27) of the chassis (20). A draw bar (28) allows this wheeled chassis to be wheeled around by a single person.

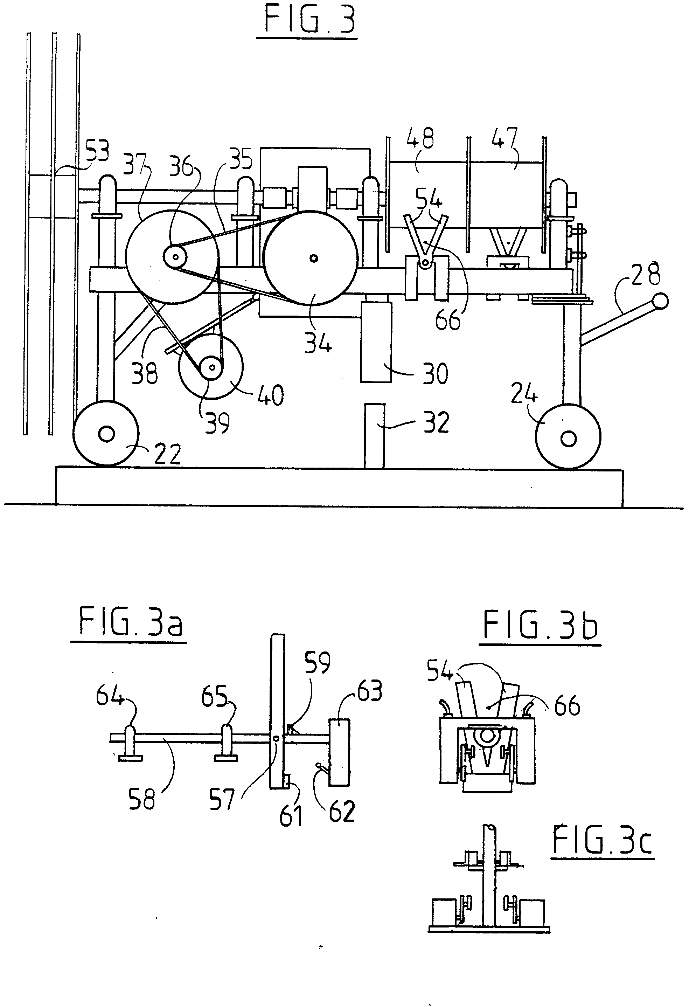

The apparatus has a downwardly depending shaft 29 with a sleeve (30) over it. A concrete pad (31) is provided at a suitable position adjacent a field with a post (32) standing up from it. When the apparatus is placed over the pad (31) in the correct position, the sleeve (30) can be dropped over the post (32) to anchor the apparatus in position for winching. The chassis (20) carries a worm and pinion gearbox (33) which is driven by a system of pulleys and V-belts (34) to (38) (see Figure 3) similar to that described with reference to Figure 1, from the drive pulley (39) of the electric motor (40). The gearbox (33) has output shafts (41) and (42) (see Figure 2) on both sides which turn in coupler bushes (43) and (44) respectively, again the bushes and the ends of the shafts being drilled with holes so that coupler pins can be placed through the holes when it is desired to transmit the drive. The bushes (43) and (44) are fixed to shafts (45) and (46) respectively so that when the pins are passed through the holes, the drive is transmitted from the gearbox to the shafts (45) and (46). The shaft (45) carries two windlasses (47) and (48) and the shaft is journalled on plummer blocks (49) and (50) on the chassis. The shaft (46) is journalled on plummer blocks (51) and (52) on the chassis and carries a windlass (53) for a lay flat hose which is used for supplying water to the irrigating unit so that the lay flat hose can be rolled up, expressing the water from it at the end of irrigating intervals. A yoke (54) is mounted aligned with the windlass (48) and a yoke (55) is mounted aligned with the windlass (47). The yokes (54),(55) are the same as each other, one to one side of the apparatus and one to the other. The yoke construction is shown in more detail in Figures 3a, 3b and 3c on a somewhat enlarged scale. The yokes (54) and (55) each comprises essentially two bars in a V-shaped configuration which are pivotally mounted by a pivot (57) on a shaft (58). A limit stop (59) is fixed on the shaft (58) to limit the clockwise turning of the yoke (54) to the position as shown in Figure 3a. The yoke can, however, be moved in an anti-clockwise direction. A cross plate (61) at the lower end of the yoke bars can actuate the toggles (62) of one or more limit switches (63) which are mounted at the end of the shaft (58). The shaft (58) is journalled by plummer blocks (64) and (65) on to the chassis of the winching apparatus so that the yoke arms can swing to the left and to the right. This is because the cable (66) which is wound up on the windlass and pulls the crawler irrigating unit, passes between the V of the yoke bars and as the cable takes various winding up positions on the windlass the rotatability of the shaft (58) allows the yoke bars simply to follow the cable in that plane. However, if a toggle such as a bolt and nut is fixed on the cable (66), as the cable is pulled in by being wound up on the windlass, it pulls the yoke arms in the direction of the arrow (60) until the cross plate (61) actuates the limit switch (63) and this can be suitably wired to, for example, switch off the electric motor. This can leave the crawler irrigating unit in a fixed position for a while, while it continues to irrigate, for example, and a timer unit then can come into operation so as to provide for irrigating for a desired or required timing after which the electric motor will again be switched on, the signal from the limit switch (63) overridden temporarily until the toggle has passed through the yoke arms (56) and then the electrical circuit reset so that when a next toggle comes along, it can again actuate the limit switch (63) so as, for example, to stop the electric motor.

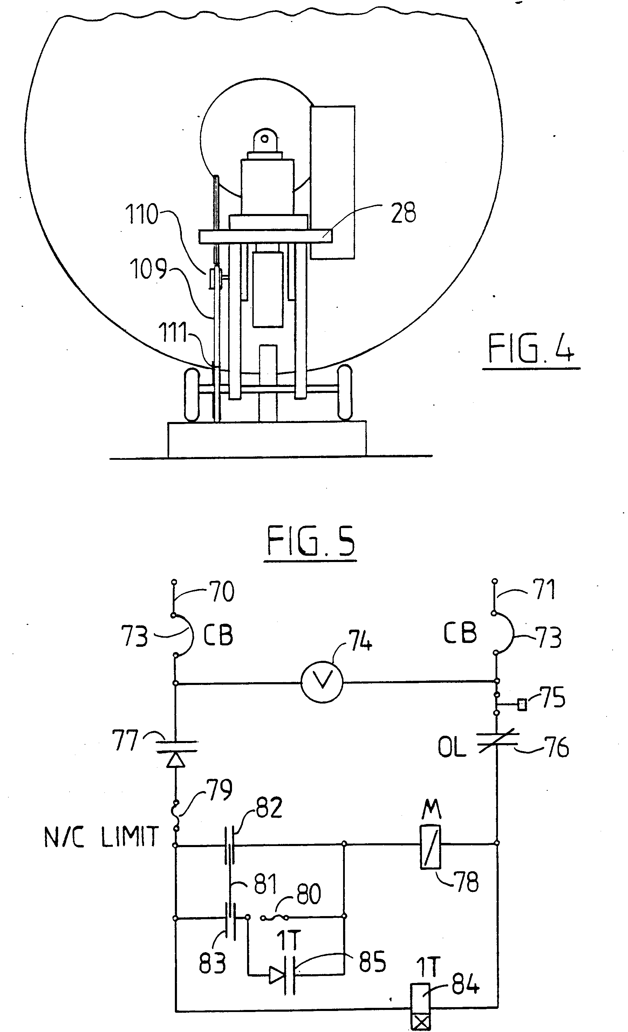

The electrical circuitry which can be used is shown in Figure 5. The power is supplied at the lines (70) and (71) *via* a circuit breaker (73) shown as "CB" and a volt meter V numbered (74) can provide a reassurance indication that the power is available. An emergency stop button (75) is provided in bright red on a prominent position on the machine so that a person can bang the stop button down to stop the entire apparatus should an emergency arise such as fingers being caught in the V-belts or in the cable being wound on to the windlass, etc. An overload limit switch (76) is included in the circuit to open the circuit should the current reach overload proportions. A mechanical timer switch (77) is included in the circuit which can be set to any required time delay to provide an overall time limit after which the apparatus will stop winching. The electric motor (78) is connected in circuit and the normally closed limit switches which are controlled by the yoke (55) or alternatively or in addition by the yoke (54) are the switches (79) and (80). A further switch (81 ) is provided which can be switched over either to the manual setting as indicated at the connectors (82) or for the automatic setting as indicated by the connectors (83). An adjustable timer device (84) is connected across the power supply and controls the circuit breaker (85) for automatic timing control on the auto setting.

If placed on to the manual setting, the motor will run winching in the irrigating unit until a toggle which must be placed on the cable near to the irrigating unit reaches the yoke (54) or (55) so as to actuate the normally closed limit switch (79) to open circuit and stop the motor. If turned over to the auto setting, further toggles can be provided at intermediate positions on the cable or the cables being winched in and these can actuate the normally closed limit switch (80) via the yoke (54). When this limit switch (80) is actuated the motor will again stop running but the timer device (84), will be actuated and after a time, which can be adjustable to a desired period, has elapsed, the contacts (85) of the timer device will close to start the motor running again, which will pull the toggle through the yokes (54) or (55) until they are able to flip back under spring action to their unactuated position re-closing the limit switch (80). After a short delay, the timer contacts (85) will re-open to reset the timer for the next cycle of operation. In this way the irrigating unit can be automatically stopped, allowed to irrigate for a period in position and re-started so as to move on to the next position and so on.

Figure 7 is convenient for further description of the method of using the equipment, for it shows a field (90) adjacent a road or track (91) and a further field (92) on the other side of the road or track (91). The widths (93) of the fields can be 200 meters each. A mains pipe (94) can be buried in the field (90) at a mid-way position extending along the length of the field in the direction of arrow (95) and similarly a mains pipe (96) can be buried in the mid position in the field (92) extending in the direction of the arrow (97). These main pipes (94) and (96) can be supplied under pressure with suitable irrigating water and provision can be made for dosing with fertiliser and/or insecticide and/or herbicide as required from time to time. The pipes (94) and (96) have longitudinally spaced connection points for lay flat drag hoses (98) and (99) respectively, each of which is respectively connected to the crawler irrigating units (100) and (101) in each of the two fields respectively. Cables (102) and (103) are connected from the crawler irrigating units (100) and (101) respectively to the two winching in drums (referring to Figures 2 to 4) (47) and (48) of the winching apparatus. The lay flat hoses (98) and (99) need each only be 100 metres long which allows the cross section to be reasonably small, hence the hoses are lighter and less expensive. The crawler irrigating unit can be, for example, as shown in Figure 6. This comprises a simple frame (105) carrying an axle (106) with two wheels (107) and (108) to carry a stand pipe (109) on which desired or required irrigating means can be mounted. For example, a cannon irrigator (110) is shown as well as a boom (111) on which various drop irrigators (112) are mounted and, for example, impact sprinklers (113) are shown. This unit, of course, is entirely flexible within very wide ranges of sizes and mountings of irrigating nozzles, common jets and the like for the application of water, fertiliser and/or pesticides. In general, however, the crawler irrigating unit can be very light and this permits the cables (102) and (103) to be a very light gauge cable.

A gear pump may be mounted on the winching apparatus. Belts may be connected to drive this pump at a required speed and the crawler unit at a corresponding desired speed. For example a suitable pump will deliver 1800 litres per hour at 30 p.s.i. when run at 1450 r.p.m., while the crawler is dragged at a relatively faster rate than when irrigating.

This arrangement allows very considerable advantages to be realised. The most even and regular distribution of irrigating water over the entire irrigation area can be achieved. The swath irrigated can, for example, be 30 to 40 metres wide as indicated at (104) in the field (90) and (105) in the field (92). Within this swath various irrigating regimens can be automatically controlled, i.e. in the case of a cash crop such as vegetables, a patch of potatoes which are well advanced can be more heavily irrigated and a patch further on in the same swath of newly planted cauliflowers or whatever the requirements are. The total mass of the crawler irrigating unit can be from 20 to 80 kilograms, as compared with 200 to 300 kilograms of the prior art device. Only a single labourer therefore would be necessary for moving all of the equipment around including when the next cycle comes so as to move the winching apparatus to the position indicated by the broken lines (106) so as to irrigate the next swath as indicated by the broken line (107). The swaths of 30 to 40 metres by 400 metres are irrigated in each stage. The handling of the supply hoses (98) and (99) always used to present difficulty because of their considerable weight when filled with water. Now the hoses can be wound up on the winch (53) which has two drums available for pulling in the lay flat hoses from both sides at the same time and while they are pulled up and winched on to the windlasses, the water is expelled. Then the winching apparatus with hoses can be moved across to the position (106), the irrigator units moved, the hoses reconnected and the cycle repeated. Because of the lightness of the irrigating units, damage to the lands and compacting is minimised. The economies of the apparatus and method of this invention allow the burying of the main pipes (94) and (96) in an economically advantageous total solution. With the adaptability of this equipment, it no longer becomes necessary to design according to maximum water flow rates with the result that smaller pipe diameters can be used which reduce the equipment costs overall. Although the winching apparatus has been found to be light enough for a single person to draw it manually, if desired, a driving mechanism can be used which will comprise applying a V-belt (109) to the pulleys (110) and (111) as shown in the view of Figure 4 so as to motor drive the device. Thus, using the power of the motor applied to two driving wheels of the apparatus and an electrically actuated switch which can be provided in an electrical panel, the device can be moved. An advantage of the apparatus is that the human factor is eliminated in the control of the irrigation schedule programs since these are controlled automatically in the manner described. This also allows it to be used during the night as well as the day time giving maximum utilisation of the equipment. Not only can compacting of the lands be reduced as compared with conventional approaches, but the damage to equipment and to crops resulting from the necessity to use large numbers of labourers in the past can be avoided since this device can be implemented with only a single labourer. In cases where, for example, the rate of water supply from a borehole starts to dry up, the system can be adapted in terms of the periods of irrigation to compensate for that using the timing mechanism.

The claims which follow are to be considered an integral part of the disclosure. Reference numbers (directed to the drawings) shown in the claims are intended to facilitate the understanding of the claims, and are in no way intended to restrict the scope of the claims to what is shown in the drawings, unless the contrary is clearly apparent from the context.

## Claims

1. Irrigation equipment comprising an electrically driven winching apparatus (3),(47), (48), adapted to be anchored at a desired or required location, and a cable (102), (103) for connection to a crawler irrigating unit (100), (101), so that, when the winching apparatus (3),(47),(48) is operated, the crawler irrigating unit (100), (101) is drawn towards it.

2. Irrigation equipment as claimed in claim 1, comprising a timer device (84) adapted to time and regulate periods during which the winching apparatus (3),(47),(48), is winching and/or periods during which the winching apparatus (3),(47),(48) is stationary.

3. Irrigation equipment as claimed in claim 1, in which the cable (102), (103) has fitted to it a toggle and the winching apparatus (3),(47),(48), has a yoke (54), (55) adapted to be engaged by the toggle while the cable (102), (103) is being winched in, the yoke (54), (55) being adapted to activate a desired or required response.

4. Irrigation equipment as claimed in claim 1, comprising an auxiliary windlass (47) adapted for winching in a layflat drag hose after use.

5. Irrigation equipment as claimed in claim 1, provided with a transmission (109), (110), (111) which may be coupled to the electrical drive (16) to drive the apparatus over the ground.

6. Irrigation equipment as claimed in claim 3, comprising a timer device (84) adapted to time and regulate periods during which the winching apparatus (3),(47),(48), is winching-and/or periods during which the winching apparatus (3),(47),(48), is stationery the yoke (54),(55) being adapted to switch the winching action off when actuated by a toggle and the timing device (84) being adapted to restart the winching action after a desired- or required time interval.

7. Irrigation equipment as claimed in claim 1, provided with means to adjust the speed of winching in.

8. Irrigation equipment as claimed in claim 1, comprising two windlasses (47), (48) and two cables (102), (103) for connection to two crawler irrigating units (100), (101), one to each side of the winching apparatus (3),(47),(48).

9. Irrigation equipment as claimed in clam 1, comprising
- a dosing device for applying, *via* the apparatus, at least one of a fertiliser, a herbicide and an insecticide; and
- means for controlling the supply of water and/or fertiliser and/or insecticide and/or herbicide to the unit which means is linked to the winching apparatus (3),(47),(48) so that the water and/or fertiliser and/or insecticide and/or herbicide can be switched on and switched off by signals from the winching apparatus (3),(47),(48).

10. A method of irrigating using irrigation equipment as claimed in claim 1 which comprises placing the winching apparatus (47), (48) at the side of a field (90), (92), placing a crawler irrigating unit (100), (101), in the field, connecting a hose (98), (99) from the unit (100), (101), to a source of irrigating water (94), (96), and a cable (102), (103), from the unit (100), (101), to the winching apparatus (47), (48), supplying the water and electrically connecting and driving the winching apparatus (47), (48).
